# FASCICULE DE BREVET EUROPEEN

(11) **EP 2 180 038 B1**
(45) Date de publication et mention de la délivrance du brevet: **22.04.2015**
(21) Numéro de dépôt: 09305978.0
(22) Date de dépôt: 14.10.2009
(51) Int. Cl.: C12M 1/00

(54) **Installation de génération d'un environnement climatique comportant au moins une cellule d'étude environnementale apte à recevoir un échantillon à étudier**
Anlage zur Erzeugung einer klimatischen Umgebung, die mindestens eine Zelle zu Umgebungsstudienzwecken enthält, in die eine Probe zur Untersuchung gegeben werden kann
Installation for generating a climatic environment comprising at least one environmental research cell capable of receiving a sample to be studied

(30) Priorité: 27.10.2008 FR 0805951
(43) Date de publication de la demande: 28.04.2010
(73) Titulaire: Société J.F. Cesbron Holding, 49124 Saint-Barthélémy-d'Anjou (FR); Centre National de la Recherche Scientifique, 75794 Paris Cedex 16 (FR)
(72) Inventeur: Verdier, Bruno, 77000 MELUN (FR); Jouanneau, Isabelle, 77140 ST PIERRE LES NEMOURS (FR); Rabin, Christian, 72200 LA FLECHE (FR); Simonnet, Benoît, 44300 NANTES (FR); Roussiere, Arnaud, 49460 ECUILLE (FR); Chabosse, Christophe, 49220 VERN D'ANJOU (FR)
(74) Mandataire: Laget, Jean-Loup

(56) Documents cités:
- WO-A-2005/030394
- CH-A5- 696 326
- DE-A1-102005 036 763
- GB-A- 2 228 989
- US-A- 5 341 595

## Description

La présente invention concerne une installation de génération d'un environnement climatique pour l'étude de son impact sur au moins un échantillon incluant au moins un être vivant, en particulier pour l'étude des variations dudit environnement sur les constituants dudit échantillon, cet échantillon formant par exemple un écosystème aquatique ou terrestre à étudier.

Elle concerne plus particulièrement une installation de génération d'un environnement climatique comportant au moins :
- une cellule d'étude environnementale apte à recevoir un échantillon à étudier,
- des moyens de génération d'un environnement climatique aptes à modifier l'état de l'atmosphère de la ou de chaque cellule d'étude, cet état se caractérisant au moins par les paramètres température, humidité, ensoleillement, pression, vent, précipitations, teneur en gaz,
- et un système électronique et/ou informatique de commande de l'installation, ledit système pilotant au moins les moyens de génération d'un environnement climatique.

Une telle installation de génération d'un environnement climatique pour l'étude de la croissance de plantes est connue à travers le brevet US-5.341.595.

Pouvoir étudier l'impact de l'environnement sur la faune, la flore ou tout autre type d'organisme vivant devient une nécessité, notamment pour prédire, à court ou moyen terme, le devenir des écosystèmes.

Jusqu'à présent, les milieux scientifiques et/ou industriels intéressés par de telles études disposent d'installations fixes comportant un nombre réduit de cellules climatiques. Chaque cellule est équipée de moyens électriques de chauffage et de refroidissement de son atmosphère et comporte une simple table sur laquelle l'échantillon à étudier est posé. Ces cellules climatiques ne disposent pas des moyens de générer un environnement à la carte. La réalisation des installations sous forme d'installations permanentes, installées à demeure, les solidarise complètement des infrastructures d'accueil figées et ne permet pas d'intégrer naturellement les spécificités climatiques et atmosphériques locales d'un climat étudié (par exemple, l'étude d'un climat d'altitude impose une intégration des conditions barométriques locales).

Par ailleurs, l'absence de mobilité d'une telle installation empêche la prise en compte de conditions environnementales particulières telles que la pollution de l'air, l'éruption d'un volcan ou autre.

Un but de la présente invention est de proposer une installation de génération d'environnement climatique dont la conception permet son implantation en un site quelconque de la planète en vue de permettre notamment la prise en compte de conditions environnementales particulières.

Un autre but de la présente invention est de proposer une installation de génération d'un environnement climatique dont la conception permet l'obtention, de manière simple, d'un excellent rendement énergétique tout en permettant de couvrir une large plage de température par exemple de -12°C à 45°C.

A cet effet, l'invention a pour objet une installation de génération d'un environnement climatique pour l'étude de son impact sur au moins un échantillon incluant au moins un être vivant, ladite installation comportant au moins :
- une cellule d'étude environnementale apte à recevoir un échantillon à étudier,
- des moyens de génération d'un environnement climatique aptes à modifier l'état de l'atmosphère de la ou de chaque cellule d'étude, cet état se caractérisant au moins par les paramètres température, humidité, ensoleillement, pression, vent, précipitations, teneur en gaz,
- et un système électronique et/ou informatique de commande de l'installation, ledit système pilotant au moins les moyens de génération d'un environnement climatique,
**caractérisée en ce que** ladite installation est réalisée sous forme de modules de construction préfabriqués, parallélépipédiques, transportables et connectables les uns avec les autres, l'un des modules intégrant un dispositif de production et de stockage de fluide chaud et de fluide froid au moins pour l'alimentation en fluide(s) de la partie des moyens de génération d'un environnement climatique disposés dans la ou les cellules environnementales et formés par des moyens de chauffage/refroidissement de l'atmosphère desdites cellules, ce module formant un module unique distinct du ou des modules intégrant au moins une cellule environnementale.

Grâce à la réalisation de l'installation sous forme de modules préfabriqués, de type conteneur ou bungalow, au gabarit routier, il est aisé de transporter l'installation d'un site à un autre et de tester des conditions terrestres aquatiques ou aériennes. Grâce à la présence d'un dispositif de production et de stockage de fluide chaud et de fluide froid et à son intégration dans un module unique, il est possible, en utilisant comme source de fluide ledit dispositif, de s'adapter à la fois à une faible et à une forte demande en fluide et en particulier d'alimenter tous les moyens de climatisation ou de chauffage/refroidissement de l'installation en couvrant une large plage de température avec un coût énergétique faible.

De préférence, la ou chaque cellule d'étude environnementale loge, à l'intérieur de son enceinte, de manière amovible, au moins un réceptacle pour la réception de l'échantillon à étudier, ce réceptacle étant équipé de moyens de chauffage/refroidissement dudit échantillon indépendants en fonctionnement des moyens de chauffage/refroidissement de l'atmosphère équipant ladite cellule, les moyens de chauffage/refroidissement d'un réceptacle et les moyens de chauffage/refroidissement de l'atmosphère d'une cellule étant respectivement formés par au moins un échangeur thermique dont la source d'alimentation en fluide est formée par le dispositif de production de fluide chaud et de fluide froid.

Un tel réceptacle permet de reproduire autour de l'échantillon formé par exemple par un écosystème, terrestre ou aquatique, les gradients thermiques observés dans les milieux naturels terrestres ou aquatiques et de générer des chocs thermiques. La reconstitution des effets du climat au niveau de l'échantillon peut ainsi être très proche de la réalité. Grâce au fait que le réceptacle est logé de manière amovible à l'intérieur de l'enceinte, la préparation d'échantillon est facilitée. Enfin, la polyvalence du dispositif de production et de stockage de fluide chaud et de fluide froid apte à la fois à réguler en température les parois de la cuve et l'atmosphère de l'enceinte permet de réduire l'encombrement total de l'installation. Enfin, le module de production et de stockage de fluide chaud et de fluide froid peut comporter des moyens de connexion à une alimentation électrique et une connectique permettant l'alimentation en énergie des autres modules. Ainsi, une seule connexion électrique peut suffire pour l'alimentation en énergie de l'ensemble des modules.

De préférence, le réceptacle est formé d'une cuve cylindrique à paroi extérieure thermiquement isolante servant à la réception de l'échantillon à étudier et d'un socle sur lequel la cuve est en position dressée, dite verticale apte à reposer, ledit socle étant équipé d'au moins trois capteurs de poids à lecture indépendante, ces capteurs de poids répartis à la surface du socle étant sollicités en position d'appui de la cuve sur le socle, tandis que la cuve présente un corps de cuve tubulaire comportant une double paroi divisée en au moins deux zones décalées le long de l'axe longitudinal de la cuve, chaque zone, qui délimite un volume annulaire régulable en température à l'aide de fluide issu du dispositif de production et de stockage de fluide chaud et de fluide froid, formant au moins un échangeur thermique apte à refroidir ou à réchauffer le contenu de la cuve, chaque échangeur étant isolé thermiquement du ou des autres échangeurs thermiques.

La présence de capteurs de poids permet d'étudier les entrées et les sorties au sein de l'échantillon à étudier. La superposition des échangeurs thermiques annulaires constitutifs du corps de cuve tubulaire permet quant à elle de reconstituer les phénomènes subis par l'échantillon, en particulier lorsque cet échantillon correspond dans la réalité à un prélèvement dans le sol ou dans un milieu aquatique qui peut être soumis à des variations de température en fonction de la profondeur de l'échantillon dans ledit milieu.

De préférence, le dispositif de production et de stockage de fluide chaud et de fluide froid comprend au moins deux ballons de stockage de fluide dits l'un, ballon de fluide chaud, l'autre, ballon de fluide froid et des moyens de production de froid et de chaud formés par une installation frigorifique comprenant au moins un compresseur, un condenseur, un détendeur et un évaporateur reliés entre eux par un circuit dit principal de circulation d'agent frigorifique, le condenseur et l'évaporateur formant chacun un échangeur thermique avec le fluide contenu dans l'un des ballons et étant aptes l'un, à réchauffer le fluide du ballon de fluide chaud, l'autre, à refroidir le fluide du ballon de fluide froid, ladite installation frigorifique comprenant en outre au moins un système de décharge thermique commun au côté évaporateur et au côté condenseur, ce système de décharge thermique étant formé par un échangeur thermique air/agent frigorifique disposé sur un circuit secondaire formé d'une part, par une dérivation de la portion du circuit principal d'alimentation en agent frigorifique du condenseur, d'autre part, par une dérivation de la portion du circuit principal d'alimentation en agent frigorifique de l'évaporateur, chaque dérivation présentant une alimentation en agent frigorifique pilotée au moins en fonction de la pression et/ou de la température régnant dans le circuit principal de circulation d'agent frigorifique.

La présence de ballons permet de répondre indifféremment à une faible et à une forte demande. La présence d'un système de décharge commun au côté condenseur ou chaud de l'installation et au côté évaporateur ou froid de l'installation permet de produire à l'aide d'un même dispositif, à la fois du froid et du chaud, et ce de manière simultanée, ou de fonctionner sur trois modes, à savoir chaud, froid, chaud et froid en optimisant la consommation d'énergie.

Un tel dispositif est capable à la fois d'utiliser le condenseur comme générateur d'énergie pour chauffer un fluide et l'évaporateur comme capteur d'énergie pour refroidir un autre fluide, ces fluides constituant la source d'alimentation en fluide de l'ensemble des moyens de chauffage ou refroidissement ou de climatisation de l'installation.

Les moyens de génération d'un environnement climatique d'une cellule d'étude environnementale comprennent des moyens de production de conditions environnementales et des moyens de contrôle desdites conditions environnementales, au moins une partie des moyens de production des conditions environnementales étant disposés dans un local dit technique transportable.

Selon une première forme de réalisation de l'invention, dans laquelle l'installation comporte au moins deux cellules environnementales, l'installation comporte un seul local technique se présentant sous forme d'un module unique, ce module étant commun à l'ensemble desdites cellules.

Selon une deuxième forme de réalisation de l'invention, la ou chaque cellule environnementale présente un local technique formant interface de liaison entre le module intégrant le dispositif de production et de stockage de fluide chaud et de fluide froid et ladite cellule environnementale, ce local technique étant équipé de moyens de raccordement d'une part, au module intégrant le dispositif de production et de stockage de fluide chaud et de fluide froid, d'autre part, à au moins une cellule environnementale.

De préférence, le système électronique et/ou informatique de commande de l'installation est logé à l'intérieur d'un local climatisé équipé d'instruments de laboratoire, ce local dit local laboratoire formant seul ou en coopération avec au moins une cellule environnementale un module apte à échanger des informations avec l'un quelconque des autres modules de l'installation, les moyens de climatisation dudit local laboratoire présentant une source d'alimentation en fluide formée par le dispositif de production et de stockage de fluide chaud et de fluide froid à l'état raccordé desdits modules.

L'invention sera bien comprise à la lecture de la description suivante d'exemples de réalisation, en référence aux dessins annexés dans lesquels :
la figure 1 représente une vue schématique de dessus d'un premier mode de réalisation d'une installation modulaire conforme à l'invention ;
la figure 2 représente une vue schématique de dessus d'un deuxième mode de réalisation d'une installation modulaire conforme à l'invention ;

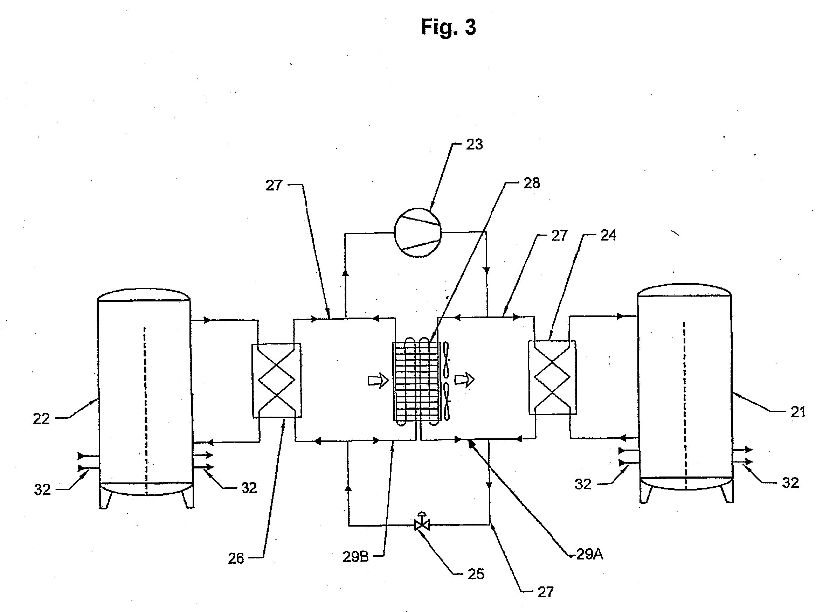

la figure 3 représente une vue schématique du dispositif de production et de stockage de fluide chaud et de fluide froid ;
la figure 4 représente une vue schématique partielle de l'ensemble formé par le dispositif de production et de stockage de fluide chaud et de fluide froid, une cellule environnementale et son local technique, le local laboratoire et les liaisons entre lesdits éléments pour le fonctionnement des moyens de chauffage/refroidissement de l'atmosphère de la cellule environnementale ;
la figure 5A représente une vue schématique partielle de l'ensemble formé par le dispositif de production et de stockage de fluide chaud et de fluide froid, une cellule environnementale et son local technique, le local laboratoire et les liaisons entre lesdits éléments pour le fonctionnement des moyens de chauffage/refroidissement du réceptacle logé à l'intérieur d'une cellule environnementale ;
la figure 5B représente une vue de détail des moyens de raccordement du réceptacle au dispositif de production et de stockage de fluide chaud et de fluide froid ;
la figure 6 représente une vue schématique de l'ensemble formé par une cellule environnementale, son local technique, le local laboratoire et les liaisons entre lesdits éléments pour la régulation du taux d'humidité dans une cellule environnementale et
la figure 7 représente une vue schématique de l'ensemble formé par une cellule environnementale, son local technique, le local laboratoire et les liaisons entre lesdits éléments pour la régulation de la pression et de la teneur en gaz de l'atmosphère d'une cellule environnementale.

Comme mentionné ci-dessus, l'installation de génération d'un environnement climatique, objet de l'invention, est destinée à permettre l'étude de l'impact dudit environnement sur au moins un échantillon incluant au moins un être vivant, cette installation étant apte à être utilisée notamment pour l'étude d'écosystème aquatique ou terrestre en vue d'étudier, par exemple, l'impact des variations climatiques sur les constituants, tels que microfaune, flore, microflore, micro-organisme ou autre des écosystèmes.

Cette installation comporte au moins :
- une cellule 1 d'étude environnementale apte à recevoir un échantillon à étudier,
- des moyens 7 de génération de l'environnement climatique aptes à modifier l'état de l'atmosphère de la ou de chaque cellule 1 d'étude,
- et un système 5 électronique et/ou informatique de commande de l'installation, ledit système pilotant au moins les moyens 7 de génération d'un environnement climatique.

Cette installation se caractérise par le fait qu'elle est réalisée sous forme de modules M1, M2, M3 ; M'1, M'2, M'3, M'4 de construction préfabriqués, parallélépipédiques, transportables et connectables les uns avec les autres, l'un M1 ; M'1 des modules intégrant un dispositif 2 de production et de stockage de fluide chaud et de fluide froid au moins pour l'alimentation en fluide de la partie des moyens 7 de génération d'environnement climatique disposés dans la ou les cellules 1 climatiques et formés par des moyens 8 de chauffage/refroidissement de l'atmosphère desdites cellules. Ce module M1 ; M'1 forme un module unique distinct du ou des modules M2, M3 ; M'2, M'3 intégrant au moins une cellule 1 environnementale.

Chaque module se présente sous forme d'un bungalow ou conteneur de forme générale parallélépipédique dimensionné au gabarit routier pour permettre un transport aisé d'un site à un autre dudit module. Grâce à cette conception modulaire, il est aisé de faire varier le nombre de cellules environnementales en fonction des études à réaliser pour permettre notamment l'étude en parallèle d'au moins trois échantillons. Il est également aisé de transporter l'installation sur le site à étudier de sorte que l'atmosphère initiale de l'enceinte de la ou de chaque cellule environnementale peut être formée par l'air ambiant. Ceci se révèle particulièrement intéressant lorsque l'atmosphère ambiante est soumise à une pollution ou à des événements particuliers, tels qu'une éruption volcanique qui en modifient la nature.

Le dispositif 2 de production et de stockage de fluide chaud et de fluide froid constitutif du module M1 ou M'1 de l'installation comprend au moins deux ballons 21, 22 de stockage de fluide. Le ballon représenté en 21 forme le ballon de stockage de fluide chaud tandis que le ballon, représenté en 22 aux figures, constitue le ballon de stockage de fluide froid. Ce dispositif 2 de production et de stockage de fluide comporte en outre une installation frigorifique qui forme les moyens de production de fluide chaud et de fluide froid du dispositif tandis que les ballons constituent les moyens de stockage de fluide dudit dispositif. Cette installation frigorifique comprend un agent frigorifique, tel que du fréon, qui circule à l'intérieur de ladite installation et est ainsi comprimé par un compresseur 23 avant d'être condensé par un condenseur 24 puis détendu par un détendeur 25 et évaporé à l'aide d'un évaporateur 26. Pour le passage successif de l'agent frigorifique du compresseur au condenseur puis au détendeur et enfin à l'évaporateur, l'agent frigorifique suit un circuit de circulation de fluide appelé circuit 27 principal. Dans cette installation frigorifique, le condenseur 24 et l'évaporateur 26 forment chacun un échangeur thermique avec le fluide contenu dans l'un des ballons 21, 22. Le condenseur permet ainsi de réchauffer le fluide du ballon 21 de fluide chaud, tandis que l'évaporateur 26 sert à refroidir le fluide du ballon 22 de fluide froid. En effet, dans l'échangeur thermique formé par le condenseur, l'agent frigorifique et le fluide stocké dans le ballon de fluide chaud circulent à contre-courant, le fluide destiné à être stocké dans le ballon de fluide chaud se réchauffant au contact de l'agent frigorifique qui se condense. Ainsi, le condenseur joue le rôle d'un générateur d'énergie qui permet le chauffage du fluide contenu dans le ballon de fluide chaud à l'aide de la chaleur de condensation. A l'inverse, côté froid, c'est-à-dire côté évaporateur, l'évaporateur est également formé par un échangeur thermique à l'intérieur duquel l'agent frigorifique, tel que du fréon, et l'eau contenue dans le ballon de fluide froid circulent à contre-courant, l'eau se refroidissant au contact de l'agent frigorifique qui joue le rôle de capteur d'énergie lors de son évaporation.

Cette installation comporte encore un système de décharge thermique commun au côté évaporateur 26 et au côté condenseur 24 de l'installation frigorifique. Ce système de décharge thermique permet de rejeter de l'énergie dans l'atmosphère lorsque l'énergie ne doit pas être récupérée du fait que les fluides contenus dans les ballons sont à la température souhaitée. Ce système de décharge thermique est ici formé par un échangeur 28 thermique air/agent frigorifique disposé sur un circuit secondaire formé d'une part, par une dérivation 29A de la portion du circuit principal d'alimentation en agent frigorifique du condenseur 24, d'autre part, par une dérivation 29B de la portion du circuit principal d'alimentation en agent frigorifique de l'évaporateur 26. Chaque dérivation 29A, 29B présente une alimentation en agent frigorifique pilotée au moins en fonction de la pression et/ou de la température régnant dans le circuit 27 principal de circulation d'agent frigorifique.

En d'autres termes, le circuit 27 principal comporte, au niveau du condenseur 24, une première branche qui permet d'alimenter le condenseur 24 et une deuxième branche qui permet d'alimenter le système de décharge thermique formé par l'échangeur de chaleur. Cette deuxième branche forme la dérivation 29A dudit circuit. De la même manière, côté évaporateur 26, le circuit principal se divise en deux branches, l'une servant à alimenter en agent frigorifique l'échangeur de chaleur constitutif de l'évaporateur, l'autre servant à alimenter le système de décharge. A nouveau, cette dérivation formée par la deuxième branche du circuit est représentée en 29B aux figures. Ainsi, en fonction des demandes en énergie, le condenseur d'une part, et l'évaporateur d'autre part, peuvent être ou non alimentés en agent frigorifique. Cette alimentation est pilotée par le système 5 électronique et/ou informatique de commande de l'installation qui pilote le condenseur ou le système de décharge thermique d'une part, et l'évaporateur ou le système de décharge thermique d'autre part, en fonction d'un certain nombre de paramètres, en particulier en fonction des demandes résultant du fonctionnement des moyens de génération d'un environnement climatique et de la température du fluide stocké à l'intérieur desdits ballons.

La conception d'un tel dispositif 2 de production et de stockage de fluide chaud et de fluide froid permet de produire simultanément du chaud et du froid. Le système thermodynamique de ce dispositif s'adapte continuellement aux demandes en fluide chaud et fluide froid du reste de l'installation. La consommation énergétique est optimisée.

Dans cette installation modulaire, chaque cellule 1 d'étude environnementale loge à l'intérieur de son enceinte au moins un réceptacle 3. Ce réceptacle 3 est logé de manière amovible à l'intérieur de ladite cellule 1 de manière à permettre, par exemple, une prise d'échantillon aisée en sortant le réceptacle 3 de sa cellule 1. Ce réceptacle 3 est équipé de moyens 8 de chauffage/refroidissement de l'échantillon indépendants en fonctionnement des moyens 8 de chauffage/refroidissement de l'atmosphère équipant la cellule 1. Ces moyens 9 de chauffage/refroidissement d'un réceptacle 3 et les moyens 8 de chauffage/refroidissement de l'atmosphère d'une cellule 1 sont respectivement formés par au moins un échangeur thermique dont la source d'alimentation en fluide est formée par le dispositif 2 de production de fluide chaud et de fluide froid.

Le réceptacle 3 est formé d'une cuve cylindrique à paroi extérieure thermiquement isolante servant à la réception de l'échantillon à étudier et d'un socle sur lequel la cuve repose en position dressée, dite verticale. Le socle est équipé d'au moins trois capteurs de poids à lecture indépendante. Ces capteurs de poids sont répartis à la surface du socle et sont sollicités en position d'appui de la cuve sur le socle. La cuve présente quant à elle un corps de cuve tubulaire comportant une double paroi divisée en au moins deux zones décalées le long de l'axe longitudinal de la cuve. Chaque zone, qui délimite un volume annulaire régulable en température à l'aide de fluide issu du dispositif 2 de production et de stockage de fluide chaud et de fluide froid, forme au moins un échangeur thermique apte à refroidir ou à réchauffer le contenu de la cuve. Chaque échangeur est isolé thermiquement du ou des autres échangeurs thermiques.

Les capteurs de poids à lecture indépendante sont répartis de préférence de manière équidistante sur un cercle de centre disposé sur une droite passant par l'axe longitudinal de la cuve cylindrique. Chaque capteur de poids est indépendant et permet de régler la planéité du fond de cuve à vide. La présence de ces capteurs de poids permet d'étudier les migrations qui se produisent à l'intérieur de l'échantillon en fonction des variations de température des parois du réceptacle et du climat ou plus généralement de l'environnement climatique généré à l'intérieur de ladite enceinte.

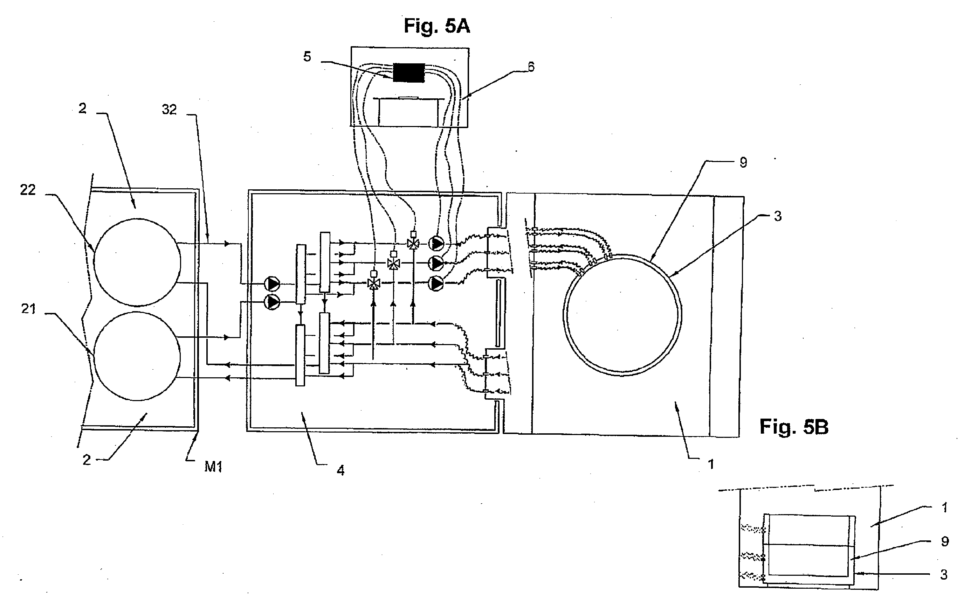

Pour permettre la réalisation d'une cuve de hauteur ajustable, de préférence, au moins l'un des échangeurs thermiques constitutifs du corps de cuve tubulaire, dit échangeur supérieur, se présente sous forme d'une pièce de type couronne séparable du reste du corps de cuve. Généralement, la cuve présente un fond à double paroi délimitant entre lesdites parois un volume régulable en température à l'aide d'un fluide régulé en température, ce fond formant un échangeur thermique supplémentaire apte à réchauffer ou à refroidir le contenu de la cuve. A nouveau, le fluide permettant la régulation en température dudit volume est formé par le fluide stocké dans les ballons de stockage de fluide du dispositif 2 de production de fluide chaud et de fluide froid. Chaque échangeur thermique annulaire constitutif du corps de cuve est donc muni de moyens de raccordement au réseau d'alimentation en fluide stocké dans les ballons de stockage du dispositif de production et de stockage de fluide chaud et de fluide froid. Ces moyens de raccordement sont formés au moins par une entrée et une sortie de fluide ménagées dans au moins une paroi, de préférence extérieure isolée thermiquement de la cuve. Cette entrée et cette sortie de fluide sont plus particulièrement visibles à la figure 5B. Enfin, le socle de la cuve est équipé de moyens de guidage et de centrage de la cuve lors du positionnement de la cuve en appui sur le socle. Ces moyens de guidage et de centrage se présentent sous forme de tiges en saillie de la surface supérieure du socle. Lesdites tiges sont inclinées en direction du centre dudit socle pour former un chemin de guidage à allure convergente en direction du centre du socle à la manière d'un entonnoir. Il est également prévu un système de butées qui permet d'éviter l'endommagement des capteurs.

Les moyens 7 de génération d'un environnement climatique d'une cellule 1 d'étude environnementale comprennent des moyens 11 de production de conditions environnementales climatiques et des moyens 12 de contrôle desdites conditions environnementales climatiques, au moins une partie des moyens 11 de production des conditions environnementales climatiques étant disposés dans un local 4 dit technique transportable.

Le système 5 électronique et/ou informatique de commande de l'installation est logé à l'intérieur d'un local climatisé équipé d'instruments de laboratoire, ce local dit local 6 laboratoire formant seul ou en coopération avec au moins une cellule 1 environnementale un module apte à échanger des informations avec l'un quelconque des autres modules de l'installation. Les moyens de climatisation dudit local 6 laboratoire présentent une source d'alimentation en fluide formée par le dispositif 2 de production et de stockage de fluide chaud et de fluide froid à l'état raccordé desdits modules.

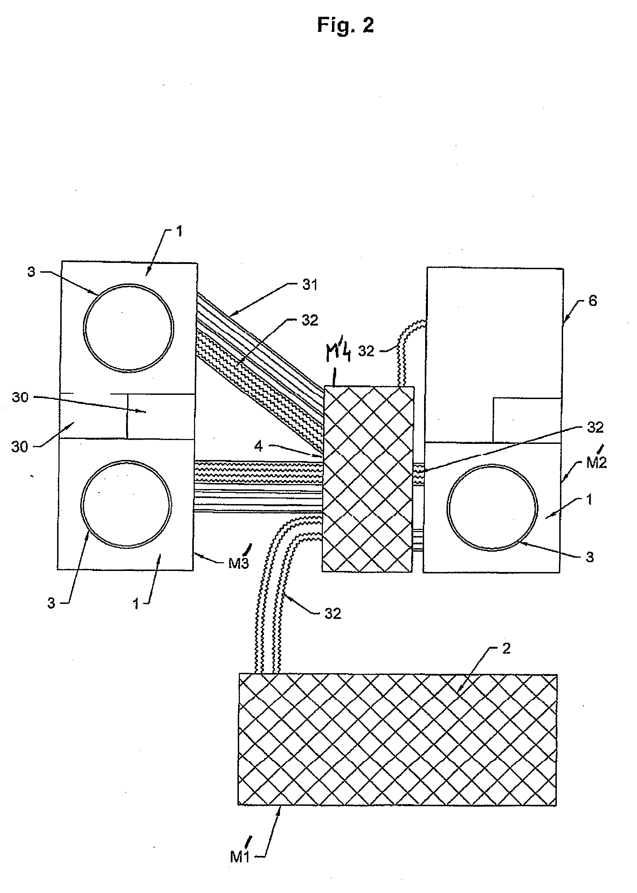

L'installation comporte donc au moins une cellule 1 d'étude environnementale, un local technique, un local laboratoire et un dispositif 2 de production et de stockage de fluide chaud et de fluide froid. Sur cette base, plusieurs types d'architecture modulaire peuvent être envisagés. Ainsi, dans l'exemple représenté à la figure 2, du type dans laquelle l'installation comporte au moins deux cellules 1 environnementales, l'installation comporte un seul local 4 technique se présentant sous forme d'un module unique, ce module étant commun à l'ensemble desdites cellules 1. Ce module technique M'4 est raccordé au module M'1 intégrant le dispositif de production et de stockage de fluide chaud et de fluide froid par une liaison 32 hydraulique et est relié aux modules M'2 et M'3 intégrant chacun au moins une cellule 1 d'étude environnementale par une liaison 31 aéraulique et une liaison 32 hydraulique.

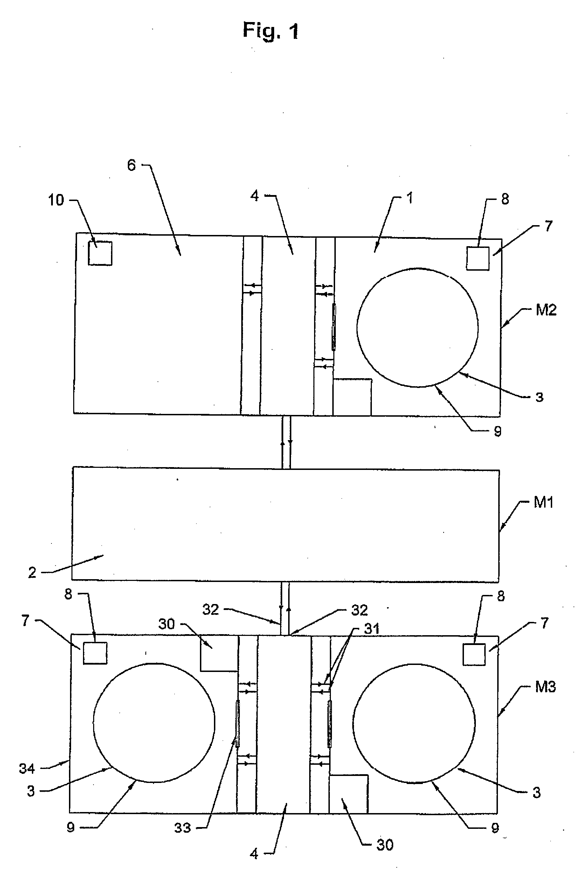

Dans l'exemple représenté à la figure 1, la ou chaque cellule 1 environnementale présente un local 4 technique formant interface de liaison entre le module M1 intégrant le dispositif 2 de production et de stockage de fluide chaud et de fluide froid et ladite cellule 1 environnementale, ce local 4 technique étant équipé de moyens 31, 32 de raccordement d'une part, au module M1 intégrant le dispositif 2 de production et de stockage de fluide chaud et de fluide froid, d'autre part, à au moins une cellule 1 environnementale.

A nouveau, chaque local 4 technique est relié à une cellule 1 d'étude environnementale par une liaison 32 hydraulique et par une liaison 31 aéraulique et est relié au module M1 intégrant le dispositif 2 de production et de stockage de fluide chaud et de fluide froid par une liaison 32 hydraulique. Indépendamment de l'architecture retenue, les liaisons hydrauliques 32 permettent l'établissement d'un circuit de circulation de fluide en boucle entre chaque ballon 21, 22 de stockage de fluide du dispositif 2 de production de stockage de fluide chaud et de fluide froid et respectivement les moyens 8 de chauffage/refroidissement de l'atmosphère d'une cellule 1 d'étude environnementale, les moyens 9 de chauffage/refroidissement d'un réceptacle et les moyens 10 de climatisation du local 6 laboratoire.

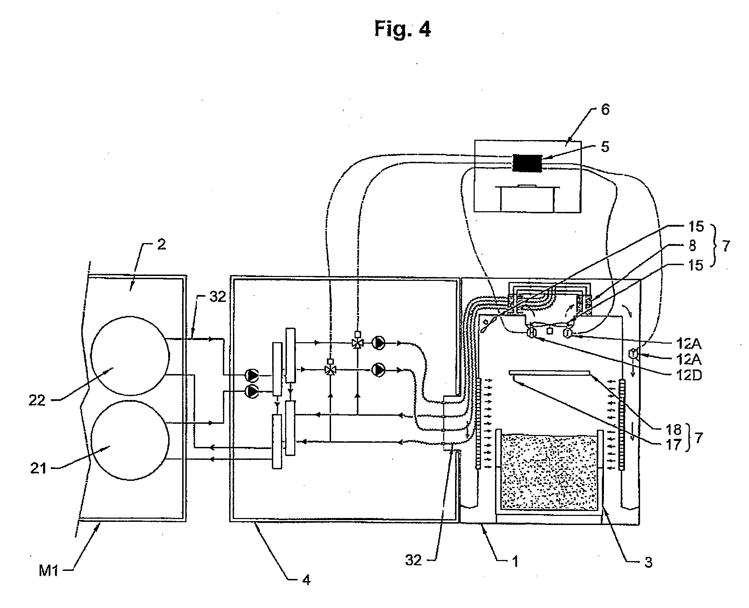

A chaque fois, le local 4 technique intègre une partie de ce circuit de circulation de fluide en boucle et distribue le fluide issu des ballons du dispositif 2 de production et de stockage de fluide vers les cellules environnementales ou le local de laboratoire ou à l'inverse collecte les fluides issus de la cellule environnementale ou du local laboratoire et les réoriente vers les ballons 21, 22 du dispositif de production et de stockage de fluide chaud et de fluide froid. Ce local 4 technique a donc à chaque fois un certain nombre d'organes de fermeture/ouverture de circuit tels que des électrovannes et des pompes. Deux exemples sont fournis aux figures 4 et 5A, 5B. La figure 4 illustre l'alimentation en fluide des moyens 8 de chauffage/refroidissement de l'atmosphère de la cellule 1 environnementale via le local 4 technique. Dans ce mode de réalisation, le fluide stocké dans le ballon 22 de stockage de fluide froid du dispositif 2 de production et de stockage de fluide est collecté à l'intérieur d'un collecteur du local 4 technique, ce fluide froid étant ensuite amené via un jeu d'électrovannes et de pompes à une batterie froide disposée à l'intérieur de la cellule 1 d'étude technique. Le fluide circule entre le ballon 22 et la batterie froide selon un circuit en boucle. Un circuit similaire s'établit entre le ballon 21 de stockage de fluide chaud et une batterie chaude également logée dans l'enceinte de la cellule 1 environnementale. Les électrovannes disposées dans le local 4 technique sur les conduites d'alimentation en fluide des batteries froides et des batteries chaudes permettent de faire varier la quantité de liquide amené dans lesdites batteries. Ces batteries chaudes et froides constituent les moyens de chauffage et de refroidissement de l'atmosphère de l'enceinte de la cellule 1 d'étude environnementale. En effet, il est prévu des ventilateurs 15 qui permettent à l'air contenu à l'intérieur de ladite enceinte de se déplacer et de se réchauffer, ou respectivement de se refroidir, au contact des parois desdites batteries froides et chaudes. La régulation de la température s'opère à l'aide du système 5 électronique et/ou informatique de commande de l'installation et de sondes de température représentées en 12A aux figures, ces sondes de température mesurant la température de l'air avant passage entre lesdites batteries et la température de l'air après passage entre lesdites batteries.

La régulation s'opère de manière extrêmement simple. Une température de consigne est choisie et entrée au niveau du système 5 électronique et/ou informatique de commande. Un écart avec la mesure de la température ambiante est détecté via les sondes 12A de température. Le système 5 électronique et/ou informatique de commande agit alors sur les électrovannes pour alimenter les batteries froides et chaudes de ladite enceinte. L'air ambiant est quant à lui aspiré par les ventilateurs 15, traité au travers des batteries, à savoir refroidi et/ou chauffé, et soufflé au travers de diffuseurs basse vitesse. Cette circulation de l'air perdure jusqu'à atteindre la valeur de consigne.

La figure 5A illustre quant à elle la conception du circuit de circulation de fluide à nouveau en boucle entre chaque ballon 21, 22 et chaque volume délimité par les parois de ladite cuve du réceptacle. A nouveau, le fluide issu d'un ballon du dispositif 2 de production et de stockage de fluide est collecté dans un collecteur, dit d'alimentation, logé à l'intérieur du local 4 technique. Le local 4 technique comporte donc un collecteur, dit d'alimentation d'eau froide et un collecteur dit d'alimentation d'eau chaude ainsi qu'un ensemble de moyens de pompage à l'intérieur de ces collecteurs et un jeu d'électrovannes qui permettent, en sortie desdits collecteurs, de mélanger le fluide froid et le fluide chaud pour obtenir un fluide régulé en température formé du mélange de fluide chaud et de fluide froid. Ce fluide régulé en température alimente une entrée d'alimentation en fluide du réceptacle. Chaque collecteur comporte donc ici trois départs de fluide pour permettre l'alimentation de chaque entrée du réceptacle de manière indépendante.

De la même manière, le local 4 technique comporte un premier collecteur, dit de retour, alimentant en retour le ballon de stockage de fluide chaud et un deuxième collecteur, dit de retour, alimentant en retour le ballon de stockage de fluide froid, lesdits collecteurs collectant en entrée le fluide pompé depuis les volumes dudit réceptacle. A nouveau, chaque collecteur de retour comporte trois entrées qui sont alimentées chacune par une sortie dudit réceptacle. Ces collecteurs de retour sont également reliés aux collecteurs d'alimentation et peuvent être directement alimentés en fluide par ces derniers.

Les moyens 11 de production de conditions environnementales climatiques d'une cellule 1 comprennent outre les moyens 8 de chauffage/refroidissement de l'atmosphère de ladite cellule 1, au moins un humidificateur 13 d'air, un déshumidificateur 14 d'air, un compresseur 20 d'air, un, généralement plusieurs, ventilateur(s) 15, des moyens 17 d'arrosage, des moyens 16 d'éclairage, des moyens 18 d'aspiration d'air hors de l'enceinte de la cellule 1, des moyens 19 d'entrée d'air dans l'enceinte de ladite cellule 1. Les moyens 12 de contrôle desdites conditions environnementales climatiques d'une cellule comprennent, disposés à l'intérieur de ladite cellule, au moins un capteur 12A de mesure de température, un hygromètre 12B, un anémomètre 12D, un capteur 12C de mesure de pression, un capteur 12E de teneur en gaz et des moyens d'adressage des résultats de mesure desdits moyens 12 de contrôle au système 5 électronique et/ou informatique de commande de l'installation.

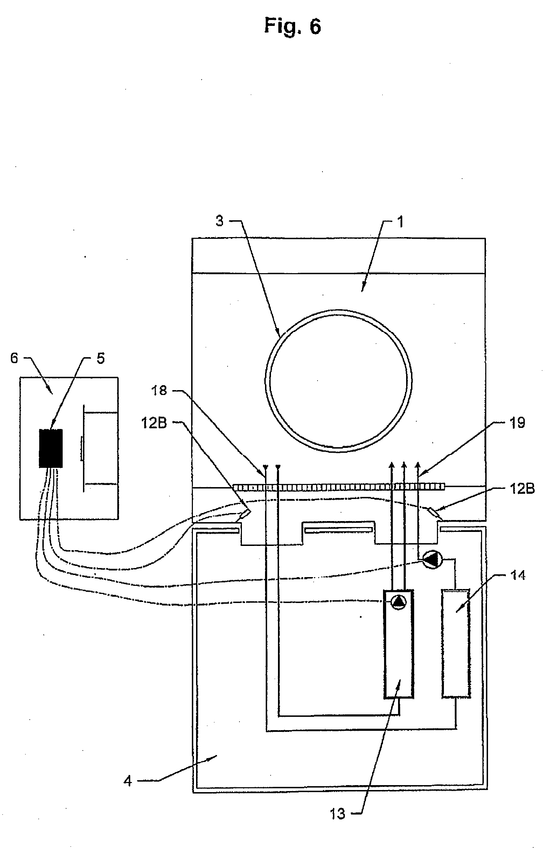

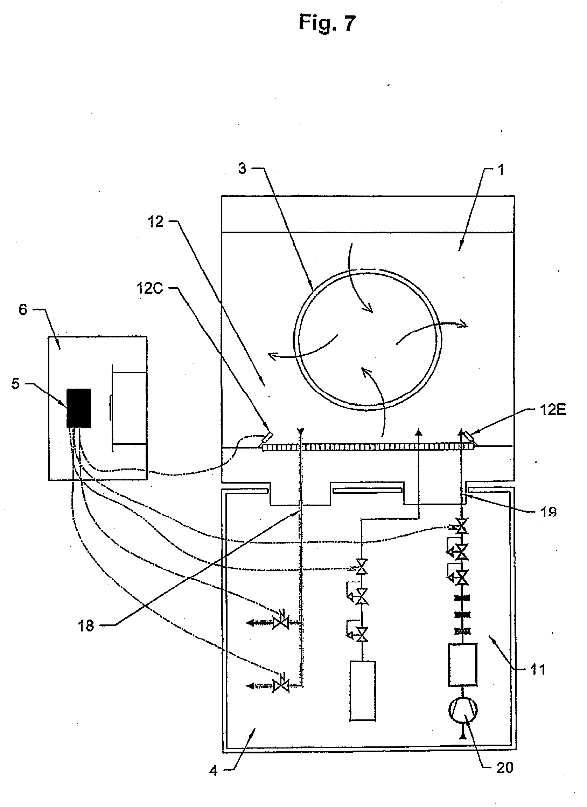

La figure 6 illustre la régulation de l'humidité relative dans une cellule 1 d'étude environnementale. Le local 4 technique comporte donc un premier circuit d'air alimenté en entrée par une bouche 18 d'aspiration de l'air contenu dans ladite enceinte de la cellule 1 environnementale, ce circuit débouchant en sortie dans l'enceinte de ladite cellule 1 d'étude environnementale, cette sortie étant représentée en 19 aux figures. Sur le premier circuit ainsi réalisé, il est prévu un humidificateur d'air représenté en 13 aux figures. Un deuxième circuit parallèle est réalisé de manière équivalente. Ce deuxième circuit parallèle comporte un déshumidificateur représenté en 14 aux figures. L'humidification peut s'opérer à l'aide d'une membrane d'un organe piézo-électrique qui permet la génération d'un brouillard d'eau dans le flux d'air sur lequel l'humidificateur est positionné. La régulation du fonctionnement de l'humidificateur 13 d'une part et du déshumidificateur 14 d'autre part s'effectue à nouveau via le système 5 électronique et/ou informatique de commande par l'intermédiaire de sondes 12B de mesure de l'humidité encore appelées hygromètres. Ces sondes sont placées au niveau de la sortie d'air de l'enceinte de la cellule environnementale et au niveau de l'entrée d'air dans ladite enceinte pour vérifier à chaque fois le taux d'humidité relative de l'air sortant et de l'air entrant dans ladite cellule. Ces informations sont adressées au système 5 électronique et/ou informatique de commande qui, en fonction de la valeur de consigne dont il dispose, agit ou non sur l'humidificateur 13 d'une part, et le déshumidificateur 14 d'autre part. La figure 7 illustre quant à elle la régulation de la pression et de la teneur en certains gaz dans l'enceinte de la cellule 1 environnementale. Ainsi, le local 4 technique peut être équipé d'une bouteille de gaz carbonique disposée sur le circuit d'entrée d'air à l'intérieur de ladite enceinte pour permettre une insufflation de gaz carbonique à l'intérieur de ladite enceinte de la cellule 1 environnementale. De même, le local 4 technique peut être équipé d'un compresseur avec un réservoir d'air comprimé disposé sur le circuit d'alimentation en air de ladite enceinte de la cellule 1 d'étude climatique pour permettre le soufflage d'air à une pression supérieure à l'intérieur de ladite enceinte. Ce système permet ainsi d'accroître la pression à l'intérieur de ladite enceinte. Sur le circuit de sortie d'air de ladite enceinte de la cellule 1 d'étude climatique, passant par le local 4 technique, il est prévu deux dérivations permettant un échappement à l'air libre d'une partie de l'air contenu à l'intérieur de ladite enceinte. La ligne d'admission d'air comprenant le compresseur est alimentée en air à partir de l'air ambiant extérieur de sorte qu'il est possible d'alimenter l'ensemble de la cellule avec l'air extérieur pour reproduire l'atmosphère ambiante. Bien que les différents circuits soient représentés distincts aux figures 6 et 7, ils peuvent bien évidemment être réalisés communs sur au moins une partie de leur longueur pour réduire le nombre de connexions aérauliques entre le local 4 technique et la cellule 1 d'étude environnementale. Ainsi, les connexions entre le local 4 technique et la cellule 1 d'étude environnementale peuvent inclure une première liaison de raccordement entre cellule 1 d'étude environnementale et local 4 technique pour alimenter la cellule avec un air apte à être humidifié et/ou chargé en gaz, une deuxième liaison pour permettre une entrée d'air déshumidifiée, la troisième liaison permettant un refoulement de l'air soit dans l'atmosphère, soit pour alimenter les circuits d'air existants en vue d'une circulation d'air en circuit fermé entre l'enceinte et le local technique. Les liaisons permettent de générer des atmosphères d'équilibre gazeux (O₂, CO₂, CH₄, N₂) correspondant à des conditions de pollution ou autre. Les moyens d'arrosage peuvent être alimentés à partir d'un réservoir recueillant l'eau de pluie ruisselant le long du toit en pente de la cellule 1 d'étude climatique ou, à partir d'un réseau d'eau, ou, à partir des eaux de condensat des moyens de chauffage/refroidissement. La cellule environnementale peut être équipée de plusieurs ventilateurs 15. Certains des ventilateurs dirigent l'air vers les batteries de chauffage/refroidissement de l'air ambiant. D'autres ventilateurs, dits de brassage de l'air, permettent la production de vent en régime laminaire ou turbulent, le régime étant fonction du nombre de ventilateurs en fonctionnement et/ou la vitesse de soufflage de chaque ventilateur. Un anémomètre 12D, disposé dans l'enceinte de la cellule 1 d'étude environnementale, permet de mesurer la vitesse du vent ainsi produit. Les moyens d'éclairage sont composés d'un système matriciel de LED (diodes électroluminescentes) permettant de reproduire le spectre solaire à différents moments de la journée. L'ensemble est piloté par un automate.

Sur le plan structurel, la ou chaque cellule 1 climatique parallélépipédique forme une structure de type caisson équipée au moins d'un sas 30 d'entrée à l'intérieur dudit caisson, d'une fenêtre 33 occultable et chauffante et d'une porte 34 latérale amovible, l'intérieur de ladite cellule 1 étant en surpression.

Chaque cellule 1 d'étude environnementale est isolée thermiquement de l'extérieur et présente des caractéristiques de salle propre. Aucun constituant de la cellule n'est susceptible de corrosion. Les constituants supportent des conditions thermiques de -15 à +45°C et hygrométriques de 10 % à 100 % d'humidité relative ou saturation. Les parois latérales de la cuve à double cloison en nid d'abeille favorisent la diffusion de l'humidité et l'homogénéisation de la température interne. Ils assurent par contre une isolation avec l'extérieur. Le sol est de préférence en polyester pour permettre le lavage et la récupération des eaux de lavage des pluies artificielles et autres résidus liquides.

Un sas équipant chaque cellule permet l'accès non contaminant à l'espace intérieur de ladite cellule. Cet accès est de préférence contrôlé par badge magnétique. Le sas est généralement équipé d'au moins trois portes, l'une ouvrant sur l'extérieur, une autre ouvrant sur l'enceinte de ladite cellule, la dernière pouvant ouvrir sur un troisième espace formé par le local technique ou le local laboratoire. Chacune de ces portes est équipée d'un hublot de sécurité en verre, largement dimensionné, permettant une visualisation du sol au plafond de l'enceinte de ladite cellule. Les portes ouvrant sur les espaces intérieurs ne sont généralement pas verrouillables. Par contre, les portes donnant sur l'extérieur sont équipées d'un verrou à l'extérieur et sont déverrouillables de l'intérieur. Tout passage du sas vers la cellule d'étude est précédé d'une mise à l'équilibre des pressions de part et d'autre de la porte d'accès de sorte que la cellule est placée légèrement en surpression. Le local laboratoire comporte une paillasse de laboratoire équipée électriquement, un poste d'eau froide et chaude, des volumes de rangement. Un petit espace bureau peut être également organisé, cet espace étant principalement dédié à la supervision des cellules 1 d'étude environnementale et la programmation de celles-ci. L'espace est entièrement lavable. De la paillasse, il est possible dans certains cas de communiquer avec au moins l'une des cellules d'étude environnementale par un mini-sas passe-échantillon.

Comme mentionné ci-dessus, le pilotage de l'installation s'opère à partir du système 5 électrique et/ou informatique de commande de l'installation. Ce système comporte de manière classique des moyens de mémorisation des données, des moyens d'analyse desdites données et des moyens de pilotage de l'installation en fonction du résultat de l'analyse effectuée par lesdits moyens d'analyse. Les données qui correspondent par exemple à des scénarios de climat peuvent être entrées manuellement dans le système ou automatiquement via des capteurs de mesure disposés à l'extérieur de l'installation et adressant directement les résultats de la mesure au système. Dans ce second cas, chaque cellule reproduit le climat correspondant au climat ambiant. Dans ce second cas, à nouveau la réalisation d'une installation sous forme d'une installation modulaire facilite un tel recueil des données.

## Revendications

1. Installation de génération d'un environnement climatique pour l'étude de son impact sur au moins un échantillon incluant au moins un être vivant, ladite installation comportant au moins :
- une cellule (1) d'étude environnementale apte à recevoir un échantillon à étudier,
- des moyens (7) de génération d'un environnement climatique aptes à modifier l'état de l'atmosphère de la ou de chaque cellule (1) d'étude, cet état se caractérisant au moins par les paramètres température, humidité, ensoleillement, pression, vent, précipitations, teneur en gaz,
- et un système (5) électronique et/ou informatique de commande de l'installation, ledit système pilotant au moins les moyens (7) de génération d'un environnement climatique,
**caractérisée en ce que** ladite installation est réalisée sous forme de modules (M1, M2, M3 ; M'1, M'2, M'3, M'4) de construction préfabriqués, parallélépipédiques, transportables et connectables les uns avec les autres, l'un (M1 ; M'1) des modules intégrant un dispositif (2) de production et de stockage de fluide chaud et de fluide froid au moins pour l'alimentation en fluide(s) de la partie des moyens (7) de génération d'un environnement climatique disposés dans la ou les cellules (1) environnementales et formés par des moyens (8) de chauffage/refroidissement de l'atmosphère desdites cellules, ce module (M1 ; M'1) formant un module unique distinct du ou des modules (M2, M3 ; M'2, M'3) intégrant au moins une cellule (1) environnementale.

2. Installation de génération d'un environnement climatique selon la revendication 1,
**caractérisée en ce que** la ou chaque cellule (1) d'étude environnementale loge, à l'intérieur de son enceinte, de manière amovible, au moins un réceptacle (3) pour la réception de l'échantillon à étudier, ce réceptacle (3) étant équipé de moyens (9) de chauffage/refroidissement dudit échantillon indépendants en fonctionnement des moyens (8) de chauffage/refroidissement de l'atmosphère équipant ladite cellule (1), les moyens (9) de chauffage/refroidissement d'un réceptacle (3) et les moyens (8) de chauffage/refroidissement de l'atmosphère d'une cellule (1) étant respectivement formés par au moins un échangeur thermique dont la source d'alimentation en fluide est formée par le dispositif (2) de production de fluide chaud et de fluide froid.

3. Installation de génération d'un environnement climatique selon la revendication 2,
**caractérisée en ce que** ledit réceptacle (3) est formé d'une cuve cylindrique à paroi extérieure thermiquement isolante servant à la réception de l'échantillon à étudier et d'un socle sur lequel la cuve est en position dressée, dite verticale apte à reposer, ledit socle étant équipé d'au moins trois capteurs de poids à lecture indépendante, ces capteurs de poids répartis à la surface du socle étant sollicités en position d'appui de la cuve sur le socle, tandis que la cuve présente un corps de cuve tubulaire comportant une double paroi divisée en au moins deux zones décalées le long de l'axe longitudinal de la cuve, chaque zone, qui délimite un volume annulaire régulable en température à l'aide de fluide issu du dispositif (2) de production et de stockage de fluide chaud et de fluide froid, formant au moins un échangeur thermique apte à refroidir ou à réchauffer le contenu de la cuve, chaque échangeur étant isolé thermiquement du ou des autres échangeurs thermiques.

4. Installation de génération d'un environnement climatique selon l'une des revendications 1 à 3,
**caractérisée en ce que** le dispositif (2) de production et de stockage de fluide chaud et de fluide froid comprend au moins au moins deux ballons (21, 22) de stockage de fluide dits l'un, ballon (21) de fluide chaud, l'autre, ballon (22) de fluide froid et des moyens de production de froid et de chaud formés par une installation frigorifique comprenant au moins un compresseur (23), un condenseur (24), un détendeur (25) et un évaporateur (26) reliés entre eux par un circuit (27) dit principal de circulation d'agent frigorifique, le condenseur (24) et l'évaporateur (26) formant chacun un échangeur thermique avec le fluide contenu dans l'un des ballons (21, 22) et étant aptes l'un (24), à réchauffer le fluide du ballon (21) de fluide chaud, l'autre (26), à refroidir le fluide du ballon (22) de fluide froid, ladite installation frigorifique comprenant en outre au moins un système de décharge thermique commun au côté évaporateur (26) et au côté condenseur (24), ce système de décharge thermique étant formé par un échangeur (28) thermique air/agent frigorifique disposé sur un circuit secondaire formé d'une part, par une dérivation (29A) de la portion du circuit principal d'alimentation en agent frigorifique du condenseur (24), d'autre part, par une dérivation (29B) de la portion du circuit principal d'alimentation en agent frigorifique de l'évaporateur (26), chaque dérivation (29A, 29B) présentant une alimentation en agent frigorifique pilotée au moins en fonction de la pression et/ou de la température régnant dans le circuit (27) principal de circulation d'agent frigorifique.

5. Installation de génération d'un environnement climatique selon l'une des revendications 1 à 4,
**caractérisée en ce que** les moyens (7) de génération d'un environnement climatique d'une cellule (1) d'étude environnementale comprennent des moyens (11) de production de conditions environnementales climatiques et des moyens (12) de contrôle desdites conditions environnementales climatiques, au moins une partie des moyens (11) de production des conditions environnementales climatiques étant disposés dans un local (4) dit technique transportable.

6. Installation de génération d'un environnement climatique selon la revendication 5 du type dans laquelle l'installation comporte au moins deux cellules (1) environnementales,
**caractérisée en ce que** l'installation comporte un seul local (4) technique se présentant sous forme d'un module unique, ce module étant commun à l'ensemble desdites cellules (1).

7. Installation de génération d'un environnement climatique selon la revendication 5,
**caractérisée en ce que** la ou chaque cellule (1) environnementale présente un local (4) technique formant interface de liaison entre le module (M1 ; M'1) intégrant le dispositif (2) de production et de stockage de fluide chaud et de fluide froid et ladite cellule (1) environnementale, ce local (4) technique étant équipé de moyens (31, 32) de raccordement d'une part, au module (M1 ; M'1) intégrant le dispositif (2) de production et de stockage de fluide chaud et de fluide froid, d'autre part, à au moins une cellule (1) environnementale.

8. Installation de génération d'un environnement climatique selon l'une des revendications 5 à 7,
caractérisée en ce les moyens (11) de production de conditions environnementales climatiques d'une cellule (1) comprennent outre les moyens (8) de chauffage/refroidissement de l'atmosphère de ladite cellule (1) au moins un humidificateur (13) d'air, un déshumidificateur (14) d'air, un compresseur (20) d'air, un, généralement plusieurs, ventilateur(s) (15), des moyens (17) d'arrosage, des moyens (16) d'éclairage, des moyens (18) d'aspiration d'air hors de l'enceinte de la cellule (1), des moyens (19) d'entrée d'air dans l'enceinte de ladite cellule (1) et en ce que les moyens (12) de contrôle desdites conditions environnementales climatiques d'une cellule comprennent, disposés à l'intérieur de ladite cellule, au moins un capteur (12A) de mesure de température, un hygromètre (12B), un anémomètre (12D), un capteur (12C) de mesure de pression, un capteur (12E) de teneur en gaz et des moyens d'adressage des résultats de mesure desdits moyens (12) de contrôle au système (5) électronique et/ou informatique de commande de l'installation.

9. Installation de génération d'un environnement climatique selon l'une des revendications 1 à 8,
**caractérisée en ce que** le système (5) électronique et/ou informatique de commande de l'installation est logé à l'intérieur d'un local climatisé équipé d'instruments de laboratoire, ce local dit local (6) laboratoire formant seul ou en coopération avec au moins une cellule (1) environnementale un module apte à échanger des informations avec l'un quelconque des autres modules de l'installation, les moyens de climatisation dudit local (6) laboratoire présentant une source d'alimentation en fluide formée par le dispositif (2) de production et de stockage de fluide chaud et de fluide froid à l'état raccordé desdits modules.

10. Installation de génération d'un environnement climatique selon l'une des revendications 1 à 9,
**caractérisée en ce que** la ou chaque cellule (1) environnementale parallélépipédique forme une structure de type caisson équipée au moins d'un sas (30) d'entrée à l'intérieur dudit caisson, d'une fenêtre (33) occultable et chauffante et d'une porte (34) latérale amovible, l'intérieur de ladite cellule (1) étant en surpression.

## Patentansprüche

1. Anlage zur Erzeugung einer klimatischen Umgebung für die Untersuchung ihres Einflusses auf mindestens eine Probe, die mindestens ein Lebewesen einschließt, wobei die Anlage mindestens aufweist:
- eine Zelle (1) zu Umgebungsstudienzwecken, die imstande ist, eine zu untersuchende Probe aufzunehmen,
- Mittel (7) für die Herstellung einer klimatischen Umgebung, die imstande sind, den Zustand der Atmosphäre der oder jeder Studienzelle (1) zu verändern, wobei dieser Zustand mindestens durch die Parameter Temperatur, Feuchtigkeit, Sonneneinstrahlung, Druck, Wind, Niederschläge, Gasgehalt gekennzeichnet ist,
- und ein elektronisches und/oder EDV-Steuersystem (5) der Anlage, wobei das System mindestens die Mittel (7) für die Herstellung einer klimatischen Umgebung steuert,
**dadurch gekennzeichnet, dass** die Anlage in Form von parallelepipedischen, transportablen und miteinander verbindbaren vorkonstruierten Modulen (M1, M2, M3; M'1, M'2, M'3, M'4) realisiert ist, wobei das eine (M1; M'1) der Module eine Produktions- und Lagervorrichtung (2) von warmem Fluid und von kaltem Fluid mindestens für die Fluidversorgung des Teils der Mittel (7) für die Herstellung einer klimatischen Umgebung integriert, die in der oder den Umweltzellen (1) angeordnet und von Heizungs-/Kühlmitteln (8) der Atmosphäre der Zellen gebildet sind, wobei dieses Modul (M1; M'1) ein einziges Modul bildet, das sich von dem oder den Modulen (M2, M3; M'2, M'3) unterscheidet, die mindestens eine Umweltzelle (1) integrieren.

2. Anlage zur Erzeugung einer klimatischen Umgebung nach Anspruch 1,
**dadurch gekennzeichnet, dass** die oder jede Zelle (1) zu Umgebungsstudienzwecken in ihrem Containment lösbar mindestens einen Behälter (3) für den Empfang der zu untersuchenden Probe aufnimmt, wobei dieser Behälter (3) mit Heizungs-/Kühlmitteln (9) der Probe ausgestattet ist, die unabhängig von den Heizungs-/Kühlmitteln (8) der Atmosphäre funktionieren, die die Zelle (1) ausstatten, wobei die Heizungs-/Kühlmittel (9) eines Behälters (3) und die Heizungs-/Kühlmittel (8) der Atmosphäre einer Zelle (1) jeweils von mindestens einem Wärmetauscher gebildet sind, dessen Fluidversorgungsquelle von der Produktionsvorrichtung (2) von warmem Fluid und von kaltem Fluid gebildet ist.

3. Anlage zur Erzeugung einer klimatischen Umgebung nach Anspruch 2,
**dadurch gekennzeichnet, dass** der Behälter (3) von einem zylindrischen Kessel mit thermisch isolierender Außenwand, der für den Empfang der zu untersuchenden Probe dient, und einem Sockel, auf dem sich der Kessel in aufgerichteter Position, das heißt, vertikal, befindet, und imstande ist, aufzuliegen, gebildet ist, wobei der Sockel mit mindestens drei Gewichtssensoren mit unabhängiger Ablesung ausgestattet ist, wobei diese Gewichtssensoren, die auf der Oberfläche des Sockels verteilt sind, in Stützposition des Kessels auf dem Sockel beansprucht werden, wogegen der Kessel einen rohrförmigen Kesselkörper aufweist, der eine Doppelwand aufweist, die in mindestens zwei entlang der Längsachse des Kessels versetzte Zonen unterteilt ist, wobei jede Zone, die mit Hilfe von Fluid aus der Produktions- und Lagervorrichtung (2) von warmem Fluid und von kaltem Fluid ein temperaturregulierbares ringförmiges Volumen begrenzt, mindestens einen Wärmetauscher bildet, der imstande ist, den Inhalt des Kessels zu kühlen oder zu erwärmen, wobei jeder Tauscher von dem oder den anderen Wärmetauschern thermisch isoliert ist.

4. Anlage zur Erzeugung einer klimatischen Umgebung nach einem der Ansprüche 1 bis 3,
**dadurch gekennzeichnet, dass** die Produktions- und Lagervorrichtung (2) von warmem Fluid und von kaltem Fluid mindestens zwei Fluidlagergefäße (21, 22), ein Gefäß (21) für warmes Fluid, das andere Gefäß (22) für kaltes Fluid, und Kälte- und Wärmeproduktionsmittel, die von einer Kühlanlage gebildet sind, die mindestens einen Kompressor (23), einen Kondensator (24), einen Druckregler (25) und einen Verdampfer (26), die miteinander durch eine Kühlmittel-Zirkulationshauptleitung (27) verbunden sind, umfasst, wobei der Kondensator (24) und der Verdampfer (26) jeweils einen Wärmetauscher mit dem Fluid bilden, das in einem der Gefäße (21, 22) enthalten ist, und imstande sind, einer, (24), das Fluid des Gefäßes (21) für warmes Fluid, zu erwärmen, der andere (26), das Fluid des Gefäßes (22) für kaltes Fluid, zu kühlen, wobei die Kühlanlage ferner mindestens ein gemeinsames thermisches Entladesystem seitens des Verdampfers (26) und seitens des Kondensators (24) umfasst, wobei dieses thermische Entladesystem von einem Luft-/Kühlmittel-Wärmetauscher (28) gebildet ist, der auf einer sekundären Leitung angeordnet ist, die einerseits von einer Umleitung (29A) des Abschnitts der Kühlmittel-Hauptversorgungsleitung des Kondensator (24), andererseits von einer Umleitung (29B) des Abschnitts der Kühlmittel-Hauptversorgungsleitung des Verdampfers (26) gebildet ist, wobei jede Umleitung (29A, 29B) eine Kühlmittelversorgung darstellt, die mindestens in Abhängigkeit vom Druck und/oder von der Temperatur gesteuert wird, die in der Kühlmittel-Hauptzirkulationsleitung (27) herrschen.

5. Anlage zur Erzeugung einer klimatischen Umgebung nach einem der Ansprüche 1 bis 4,
**dadurch gekennzeichnet, dass** die Mittel (7) für die Herstellung einer klimatischen Umgebung einer Zelle (1) zu Umgebungsstudienzwecken Mittel (11) für die Produktion von klimatischen Umweltbedingungen und Mittel (12) für die Kontrolle der klimatischen Umweltbedingungen umfassen, wobei mindestens ein Teil der Mittel (11) für die Produktion von klimatischen Umweltbedingungen in einem transportablen Technikraum (4) angeordnet ist.

6. Anlage zur Erzeugung einer klimatischen Umgebung nach Anspruch 5 der Bauart, bei der die Anlage mindestens zwei Umweltzellen (1) aufweist,
**dadurch gekennzeichnet, dass** die Anlage einen einzigen Technikraum (4) aufweist, der sich in Form eines einzigen Moduls darstellt, wobei dieses Modul der Gesamtheit der Zellen (1) gemeinsam ist.

7. Anlage zur Erzeugung einer klimatischen Umgebung nach Anspruch 5,
**dadurch gekennzeichnet, dass** die oder jede Umweltzelle (1) einen Technikraum (4) aufweist, der eine Verbindungsschnittstelle zwischen dem Modul (M1; M'1), das die Produktions- und Lagervorrichtung (2) von warmem Fluid und von kaltem Fluid integriert, und der Umweltzelle (1) bildet, wobei dieser Technikraum (4) mit Anschlussmitteln (31, 32) einerseits an das Modul (M1; M'1), das die Produktions- und Lagervorrichtung (2) von warmem Fluid und von kaltem Fluid integriert, andererseits an mindestens eine Umweltzelle (1) ausgestattet ist.

8. Anlage zur Erzeugung einer klimatischen Umgebung nach einem der Ansprüche 5 bis 7,
**dadurch gekennzeichnet, dass** die Mittel (11) für die Produktion von klimatischen Umweltbedingungen einer Zelle (1) ferner die Heizungs-/ Kühlmitteln (8) der Atmosphäre der Zelle (1), mindestens einen Luftbefeuchter (13), einen Luftentfeuchter (14), einen Luftkompressor (20), einen, im Allgemeinen mehrere Ventilator(en) (15), Beregnungsmittel (17), Beleuchtungsmittel (16), Ansaugmittel (18) von Luft außerhalb des Containments der Zelle (1), Lufteingangsmittel (19) in das Containment der Zelle (1) umfassen und dass die Mittel (12) für die Kontrolle der klimatischen Umweltbedingungen einer Zelle, die in der Zelle angeordnet sind, mindestens einen Temperaturmesssensor (12A), ein Hygrometer (12B), einen Windmesser (12D), einen Druckmesssensor (12C), einen Gasgehaltssensor (12E) und Adressierungsmittel der Messergebnisse der Kontrollmittel (12) an das elektronisches und/oder EDV-Steuersystem (5) der Anlage umfassen.

9. Anlage zur Erzeugung einer klimatischen Umgebung nach einem der Ansprüche 1 bis 8,
**dadurch gekennzeichnet, dass** das elektronische und/oder EDV-Steuersystem (5) der Anlage in einem klimatisierten Raum untergebracht ist, der mit Laborinstrumenten ausgestattet ist, wobei dieser als Laborraum (6) bezeichnete Raum allein oder gemeinsam mit mindestens einer Umweltzelle (1) ein Modul bildet, das imstande ist, Informationen mit einem beliebigen der anderen Module der Anlage auszutauschen, wobei die Klimatisierungsmittel des Laborraums (6) eine Fluidversorgungsquelle aufweisen, die in angeschlossenem Zustand der Module von der Produktions- und Lagervorrichtung (2) von warmem Fluid und von kaltem Fluid gebildet ist.

10. Anlage zur Erzeugung einer klimatischen Umgebung nach einem der Ansprüche 1 bis 9,
**dadurch gekennzeichnet, dass** die oder jede parallelepipedische Umweltzelle (1) eine Kastenstruktur bildet, die mit mindestens einer Eingangskammer (30) in das Innere des Kastens, einem verdunkelbaren und heizenden Fenster (33) und einer beweglichen Seitentür (34) ausgestattet ist, wobei das Innere der Zelle (1) in Überdruck ist.

## Claims

1. Installation for generating a climatic environment for studying its impact on at least one sample including at least one living being, said installation including at least:
- one environmental research cell (1) able to receive a sample to be studied;
- means (7) for generating a climatic environment able to modify the state of the atmosphere of said or each research cell (1), this state being at least **characterized by** parameters: temperature, humidity, period of sunshine, pressure, wind, rain, gas content,
- and one electronic and/or computer system (5) for controlling the installation, said system at least driving means (7) for generating a climatic environment,
**characterized in that** said installation is achieved as parallelepipedal prefabricated construction modules (M1, M2, M3; M'1, M'2, M'3, M'4) transportable and connectable with each other, one (M1; M'1) of the modules integrating a device (2) for producing and storing hot fluid and cold fluid at least for supplying with fluid(s) the portion of the means (7) for generating a climatic environment positioned in the environmental cell(s) and formed by means (8) for heating/cooling the atmosphere of said cells, this module (M1; M'1) forming a distinct single module of the module(s) (M2, M3; M'2, M'3) integrating at least one environmental cell (1).

2. The installation for generating a climatic environment according to claim 1,
**characterized in that** said or each environmental research cell (1) removably houses inside its enclosure at least one receptacle (3) for receiving the sample to be studied, this receptacle (3) being equipped with means (9) for heating/cooling said sample, operatively independent of the means (8) for heating/cooling the atmosphere, with which said cell (1) is equipped, the means (9) for heating/cooling a receptacle (3) and the means (8) for heating/cooling the atmosphere of a cell (1) being respectively formed with at least one heat exchanger, the fluid supply source of which is formed by the device (2) for producing hot fluid and cold fluid.

3. The installation for generating a climatic environment according to claim 2,
**characterized in that** said receptacle (3) is formed by a cylindrical tank with a thermally insulated outer wall being used for receiving the sample to be studied and by a base on which the tank is in the raised so-called vertical position able to rest thereon, said base being equipped with at least three weight sensors with independent readout, these weight sensors distributed at the surface of the base being urged in the position of the tank for bearing upon the base, while the tank has a tubular tank body including a double wall divided into at least two areas shifted along the longitudinal axis of the tank, each area, which delimits an annular volume which may be regulated in temperature by means of fluid from the device (2) for producing and storing hot fluid and cold fluid, forming at least one heat exchanger able to cool down or heat up the contents of the tank, each exchanger being thermally insulated from the other heat exchanger(s).

4. The installation for generating a climatic environment according to one of claims 1 to 3,
**characterized in that** the device (2) for producing and storing hot fluid and cold fluid, comprises at least two fluid storage flasks (21, 22), one being a so-called hot fluid flask (21), the other a cold fluid flask (22), and means for producing cold and heat formed by a refrigerating installation comprising at least one compressor (23), one condenser (24), one expansion valve (25) and one evaporator (26) connected to each other through a so-called main circuit (27) for circulating a coolant, the condenser (24) and the evaporator (26) each forming a heat exchanger with the fluid contained in one of the flasks (21, 22) and one (24) being able to heat up the fluid of the hot fluid flask (21), the other (26) being able to cool down the fluid of the cold fluid flask (22), said refrigerating installation further comprising at least one heat discharge system, common to the evaporator (26) side and to the condenser (24) side, this heat discharge system being formed by an air/coolant heat exchanger (28) positioned on a secondary circuit formed by a diversion (29A) of the portion of the main coolant supply circuit of the condenser (24) on the one hand, by a diversion (29B) of the portion of the main coolant supply circuit of the evaporator (26) on the other hand, each diversion (29A, 29B) having a coolant supply controlled at least according to the pressure and/or the temperature prevailing in the main circuit (27) for circulating a coolant.

5. The installation for generating a climatic environment according to one of claims 1 to 4,
**characterized in that** the means (7) for generating a climatic environment of an environmental research cell (1) comprise means (11) for producing climatic environmental conditions and means (12) for controlling said climatic environmental conditions, at least one portion of the means (11) for producing climatic environmental conditions being positioned in a so-called transportable equipment room (4).

6. The installation for generating a climatic environment according to claim 5 of the type, wherein the installation includes at least two environmental cells (1),
**characterized in that** the installation includes a single equipment room (4) appearing as a single module, this module being common to the whole of said cells (1).

7. The installation for generating a climatic environment according to claim 5,
**characterized in that** said or each environmental cell (1) has an equipment room (4) forming a connection interface between the module (M1; M'1) integrating the device (2) for producing and storing hot fluid and cold fluid and said environmental cell (1), this equipment room (4) being equipped with means (31, 32) for connecting to the module (M1; M'1) integrating the device (2) for producing and storing hot fluid and cold fluid on the one hand, to at least one environmental cell (1) on the other hand.

8. The installation for generating a climatic environment according to one of claims 5 to 7,
**characterized in that** the means (11) for producing climatic environmental conditions of a cell (1) comprise in addition to means (8) for heating/cooling the atmosphere of said cell (1), an air humidifier (13), an air dehumidifier (14), an air compressor (20), one, generally several fans (15), watering means (17), illumination means (16), means (18) for suction of air out of the enclosure of the cell (1), means (19) for letting air enter the enclosure of said cell (1) and **in that** the means (12) for controlling said climatic environmental conditions of a cell comprise, positioned inside said cell, at least one temperature measurement sensor (12A), a hygrometer (12B), an anemometer (12D), a pressure measurement sensor (12C), a gas content sensor (12E) and means for sending the measurement results from said control means (12) to the electronic and/or computer system (5) for controlling the installation.

9. The installation for generating a climatic environment according to one of claims 1 to 8,
**characterized in that** the electronic and/or computer system (5) for controlling the installation is housed inside an air-conditioned room equipped with laboratory instruments, this so-called laboratory room (6) forming alone or cooperating with at least one environmental cell (1), a module able to exchange information with any of the other modules of the installation, the air-conditioning means of said laboratory room (6) having a fluid supply source formed by the device (2) for producing and storing hot fluid and cold fluid, in the connected state of said modules.

10. The installation for generating a climatic environment according to one of claims 1 to 9,
**characterized in that** said or each parallelepipedal environmental cell (1) forms a box type structure equipped with at least one entry (30) airlock inside said box, with a concealable window (33) and with a removable lateral door (34), the inside of said cell (1) being overpressurized.
